# DEMANDE DE BREVET EUROPEEN

(11) **EP 4 403 864 A1**
(43) Date de publication de la demande: **24.07.2024**
(21) Numéro de dépôt: 23152783.9
(22) Date de dépôt: 20.01.2023
(51) Int. Cl.: F28F 1/22, F28D 1/02

(54) **ÉCHANGEUR DE CHALEUR, DISPOSITIF D ÉCHANGE THERMIQUE ET MÉTHODE DE MONTAGE D ÉCHANGEURS THERMIQUES**

(71) Demandeur: Wise Open Foundation, 1630 Bulle (CH)
(72) Inventeur: Geinoz, François Ignace, 1630 Bulle (CH)
(74) Mandataire: Omnis-IP

(57) **Abrégé**

La présente invention concerne un échangeur de chaleur comportant au moins un panneau permettant la circulation de fluide caloporteur. Cet échangeur de chaleur est caractérisé en ce que ledit panneau comporte au moins deux circuits indépendants de fluide caloporteur, chaque circuit comportant au moins une entrée de fluide caloporteur. Le panneau comportant en outre au moins une sortie de fluide caloporteur.

L'invention concerne également un dispositif d'échange thermique comportant au moins un échangeur de chaleur tel que défini ci-dessus. Ce dispositif est caractérisé en ce qu'il comporte un régulateur de température du fluide caloporteur.

L'invention concerne en outre une méthode de montage d'échangeurs de chaleur tels que définis ci-dessus. Cette méthode comporte les étapes consistant à placer un panneau contre un élément de construction ; à découper le panneau de façon à adapter sa forme à la forme de l'élément de construction contre lequel il est placé ; à boucher au moins une extrémité des tubes non-utilisables pour le transfert de fluide caloporteur entre l'entrée et la sortie de fluide caloporteur ; à fixer au moins un profilé sur l'un des champs du panneau de façon à relier entre elles, les entrées des tubes du chacun des circuits indépendamment des entrées des circuits adjacents; et à fixer au moins un profilé sur l'un des champs du panneau de façon à relier les sorties des tubes entre elles.

## Description

### DOMAINE TECHNIQUE

La présente invention concerne le domaine de la construction et plus précisément le domaine de l'échange thermique, en particulier au niveau de l'enveloppe de bâtiments ou de constructions. Cette invention concerne plus spécifiquement un échangeur de chaleur comportant au moins un panneau permettant la circulation de fluide caloporteur.

Cette invention concerne également un dispositif d'échange thermique comportant au moins un échangeur de chaleur tel que défini ci-dessus.

L'invention concerne en outre une méthode de montage d'échangeurs de chaleur sur ou contre un bâtiment.

### ART ANTÉRIEUR

Actuellement, il existe des échangeurs de chaleur qui sont intégrés au sol d'un bâtiment, par exemple dans une chappe, qui sont disposés contre l'enveloppe d'un bâtiment, qui sont intégrés à une paroi ou qui sont posés par exemple sous la toiture ou sur la toiture, sous des panneaux solaires notamment. Ils peuvent typiquement former un chauffage au sol ou des panneaux solaires thermiques.

Ces échangeurs de chaleur sont généralement destinés soit à prélever de la chaleur de l'environnement ou d'un bâtiment et à la stocker ou à la transformer de façon à pouvoir l'utiliser à un autre endroit et/ou à un autre moment, soit à apporter de la chaleur ou du froid au bâtiment.

Ces échangeurs de chaleur sont généralement constitués d'un tube comportant une entrée et une sortie, ce tubes formant un serpentin ou un circuit dans lequel circule un fluide caloporteur.

Ces échangeurs de chaleur présentent un certain nombre d'inconvénients. La surface utile, à savoir la surface formée par le tube constituant le circuit de fluide caloporteur est relativement faible par rapport à la surface globale, à savoir la surface délimitée par l'enveloppe du circuit. De ce fait, l'efficacité de l'échangeur est relativement faible.

Si la mise en oeuvre est assez simple dans le cas d'un chauffage au sol où le circuit est posé sur un plan horizontal et couvert par exemple par une chappe coulée, elle s'avère nettement plus complexe dans le cas où l'échangeur doit être posé verticalement, par exemple contre une paroi d'un bâtiment. Il peut en particulier être relativement difficile ou coûteux de cacher le circuit sous un revêtement décoratif tel qu'un crépi. Ceci limite souvent l'utilisation de tels échangeurs de chaleur.

Le circuit dans lequel circule le fluide caloporteur comporte un seul tube. Il suffit donc que ce tube comporte une avarie en un seul endroit pour que l'ensemble du circuit soit inutilisable. Cette avarie peut être en particulier une fuite ou éventuellement une zone bouchée. Le remplacement ou la réparation du tube peut représenter un coût prohibitif qui implique que l'ensemble du système d'échange thermique peut être inutilisable.

Pour ces différentes raisons, ces échangeurs de chaleur ont un domaine d'utilisation limité et ne sont pas posés de façon standard.

Il existe donc un besoin pour un système d'échangeurs de chaleur faciles à mettre en oeuvre, fiables, qui puissent être utilisés ou réparés relativement facilement et qui présentent une efficacité élevée.

### DESCRIPTION DE L'INVENTION

La présente invention concerne un échangeur de chaleur tel que défini en préambule et caractérisé en ce que ledit panneau comporte au moins deux circuits indépendants de fluide caloporteur, chaque circuit comportant au moins une entrée de fluide caloporteur, le panneau comportant en outre au moins une sortie de fluide caloporteur, le panneau comportant en outre au moins une sortie de fluide caloporteur.

L'invention concerne en outre un dispositif d'échange thermique tel que défini en préambule et caractérisé en ce que ce dispositif d'échange thermique comporte un régulateur de température du fluide caloporteur.

L'invention concerne encore une méthode de montage d'échangeurs de chaleur telle que définie en préambule et caractérisée en ce qu'il comporte les étapes consistant à :
- placer un panneau contre un élément de construction ;
- découper le panneau de façon à adapter sa forme à la forme de l'élément de construction contre lequel il est placé ;
- boucher au moins une extrémité des tubes non-utilisables pour le transfert de fluide caloporteur entre l'entrée et la sortie de fluide caloporteur ;
- fixer au moins un profilé sur l'un des champs du panneau de façon à relier entre elles, les entrées des tubes du chacun des circuits indépendamment des entrées des circuits adjacents;
- fixer au moins un profilé sur l'un des champs du panneau de façon à relier les sorties des tubes entre elles.

L'échangeur de chaleur de l'invention est tel que sa surface utile, c'est-à-dire la surface par laquelle se produisent les échanges de chaleur est quasiment égale à sa surface totale, c'est-à-dire à la surface délimitée par l'enveloppe du circuit de fluide caloporteur. L'efficacité d'un échangeur de chaleur dépendant notamment de sa surface utile, l'échangeur de l'invention est donc particulièrement efficace.

L'échangeur de chaleur selon l'invention présente une bonne résistance mécanique, du fait de sa structure. Ceci est particulièrement intéressant dans le cas où le fluide caloporteur est un gaz. En effet, la conductivité thermique dépend notamment de la pression du gaz. Une pression plus élevée permet un transport d'énergie plus important. Il est donc avantageux de pouvoir faire circuler un gaz à une certaine pression dans le cadre d'un échangeur de chaleur. Dans un mode de réalisation avantageux, le fluide caloporteur est du gaz carbonique CO₂ ou dioxyde de carbone circulant à une pression comprise entre 5 bars et 100 bars de préférence.

La bonne résistance mécanique de l'échangeur de chaleur est également intéressante par le fait que cela permet son utilisation comme partie intégrante d'une construction ou d'un bâtiment. En particulier, l'échangeur peut se présenter sous la forme d'un panneau intégré à une cloison d'un bâtiment et sur lequel un revêtement décoratif tel qu'un crépi peut être fixé. Un tel panneau peut comporter une grille ou une armature offrant plusieurs avantages. D'une part, cette grille ou cette armature peut augmenter la rigidité ou la résistance mécanique du panneau, ce qui permet d'augmenter la pression de gaz circulant dans l'échangeur de chaleur, sans risque que celui-ci ne se détériore. D'autre part, la grille peut présenter une surface d'accrochage qui peut être utile lorsque le panneau doit être recouvert d'un revêtement décoratif tel que notamment un crépi. La grille ou l'armature permet également d'augmenter la durée de vie du panneau et d'éviter les déformations à long terme. Cette armature ainsi que la colle permettant de la fixer à un panneau permet d'améliorer et d'assurer l'étanchéité de la jonction entre deux panneaux. il est à noter que cette armature peut également être utilisée pour entourer des tubes reliant par exemple deux panneaux entre ou reliant un panneau avec un autre composant du système.

L'échangeur de chaleur selon l'invention peut être utilisé pour faire circuler un fluide caloporteur à une température plus élevée que la température de l'environnement dans lequel il est placé ou plus faible que cette température de l'environnement. De ce fait, il peut être utilisé comme élément chauffant ou comme élément refroidissant. La fonction d'élément chauffant ou refroidissant est réalisée par le même élément. Ainsi, un échangeur de chaleur selon l'invention peut être utilisé comme élément chauffant à un certain moment et/ou dans certaines applications et comme élément refroidissant à un autre moment et/ou dans une autre application sans que cet échangeur de chaleur ne doive être modifié.

L'échangeur de chaleur de l'invention comporte au moins deux ensembles de tubes formant deux circuits distincts permettant la circulation du fluide caloporteur. Ces deux circuits peuvent être alimentés en fluide caloporteur de façon indépendante de sorte que le fluide caloporteur dans chacun des circuits présente des paramètres qui peuvent être différents. Ces paramètres peuvent être la pression, la température et la vitesse de déplacement en particulier. Selon l'application et les conditions externes à l'échangeur, les paramètres peuvent également être égaux dans les deux circuits.

Les deux circuits de fluide caloporteur peuvent être répartis en deux couches formant deux zones planes, délimitées par des parois planes. La paroi plane intermédiaire a l'avantage de renforcer la structure mécanique de l'échangeur de chaleur. Ce renforcement de la structure mécanique permet d'une part une plus forte pression du gaz caloporteur dans les circuits et d'autre part, présente des avantages en termes d'intégration dans la structure d'un bâtiment.

Les deux volumes plans ou couches formant les circuits peuvent être séparées l'une de l'autre par une couche ou un volume plan offrant une certaine isolation thermique des circuits. Ceci permet de faire circuler du fluide caloporteur dans chacun des circuits, à des températures différentes sans que ces températures ne s'égalisent par transfert de chaleur d'une couche à l'autre. Ceci permet d'optimiser les échanges de chaleur en fonction de l'application et de différents paramètres.

Selon une variante, l'échangeur de chaleur peut comporter trois couches de tubes formant trois volumes plans. Dans ce cas, plusieurs variantes d'utilisation sont possibles. Selon une variante, la couche intermédiaire et plus précisément l'entrée et/ou la sortie des tubes de cette couche intermédiaire est bouchée de façon à empêcher la circulation de fluide caloporteur dans cette couche intermédiaire. Celle-ci joue alors le rôle de couche isolante entre les deux couches dans lesquelles circule le fluide caloporteur.

La couche intermédiaire peut également présenter un certain vide de façon à améliorer encore l'isolation entre les deux couches externes.

Selon une autre variante, la couche intermédiaire peut être associée soit à l'une des couches externes soit à l'autre couche externe en fonction des besoins. Cette couche intermédiaire augmente donc le volume disponible de fluide caloporteur dans l'une des couches.

L'échangeur de chaleur de l'invention est relativement facile à mettre en oeuvre. En effet, comme il se présente sous la forme d'un panneau rigide et que les éléments du circuit de fluide caloporteur sont formés par ce panneau, la pose et le maintien du panneau est relativement simple, que ce panneau soit posé horizontalement ou verticalement. Un tel panneau peut même être fixé à un plafond par exemple, sans que cela représente de difficulté particulière.

La face extérieure de l'échangeur de chaleur étant généralement plane, elle peut être revêtue d'un élément décoratif tel qu'un crépi ou une peinture. L'échangeur de chaleur peut également être placé sous un revêtement tel qu'un panneau de bois, une tapisserie ou tout autre élément similaire.

L'échangeur de chaleur comporte en principe un nombre important de tubes dans lesquels circulent le fluide caloporteur. Il est ainsi possible de condamner certains tubes, sans que l'échangeur ne soit inutilisable. Ceci peut être réalisé par exemple en bouchant au moins l'une des extrémités des tubes à condamner. De cette manière, il est possible d'utiliser un échangeur de chaleur comportant un ou plusieurs tubes bouchés, sans compromettre le fonctionnement du reste du panneau.

Les échangeurs de chaleur selon l'invention sont particulièrement intéressants également du fait de la facilité d'assemblage de plusieurs panneaux entre eux et du fait qu'ils peuvent être découpés et assemblés sur un chantier, de façon à s'adapter au bâti sur lequel ils sont montés. Ce montage ne nécessite en effet pas d'outillage particulier. Les panneaux doivent simplement être coupés de façon appropriés, puis assemblés entre eux. L'assemblage doit ensuite être rendu étanche au fluide caloporteur, ce fluide pouvant être à une pression relativement élevée. Cet assemblage peut se faire par exemple au moyen d'un ou plusieurs éléments mécaniques auquel est ajouté un composant d'étanchéification tel qu'une colle ou un joint, éventuellement placé sur une armature.

Les échangeurs de chaleur selon l'invention peuvent être utilisés à différents endroits d'un bâtiment, par exemple le long de cloisons extérieures ou intérieures du bâtiment, dans un sol ou un plafond, sous ou sur un toit, à proximité de panneaux solaires photovoltaïques ou thermiques ou enterrés dans le sol notamment. Ils peuvent également former les cloisons d'une pièce à chauffer ou à refroidir, comme par exemple une chambre froide.

### BRÈVE DESCRIPTION DES DESSINS

La présente invention et ses avantages seront mieux compris en référence aux figures annexées et à la description détaillée d'un mode de réalisation particulier, dans lesquelles :
- la figure 1 est une vue de profil d'un panneau selon un premier mode de réalisation de l'invention ;
- la figure 2 est une de profil d'un panneau selon un deuxième mode de réalisation de l'invention ;
- la figure 3 est une vue en coupe selon l'axe A-A, d'un panneau tel qu'illustré par les figures 1 ou 2 ;
- la figure 4 est une vue de dessus d'un détail d'un échangeur de chaleur selon l'invention ;
- la figure 5 est une vue de face d'un détail d'un échangeur de chaleur selon l'invention ;
- la figure 6 représente la jonction de deux échangeurs de chaleur adjacents, selon une première forme de réalisation ;
- la figure 7 représente la jonction de deux échangeurs de chaleur adjacents, selon une deuxième forme de réalisation ;
- la figure 8 est une vue de dessus illustrant la connexion entre deux panneaux adjacents selon le mode de réalisation de la figure 7 ; et
- la figure 9 est une vue de dessus d'un détail d'un mode de réalisation particulier d'un panneau selon l'invention.

### MODE DE REALISATION DE L'INVENTION

En référence aux figures, l'échangeur de chaleur 10 selon l'invention comporte un panneau 11 sensiblement plan formé de deux parois extérieures 12 et d'au moins une paroi intermédiaire 13. La paroi intermédiaire 13 est séparée des parois extérieures 12 par des cloisons 14. Les parois et les cloisons définissent des tubes 16 parallèles entre eux et comportant une entrée 17 débouchant dans un champ du panneau 11 et une sortie 18 débouchant dans un champ opposé de ce panneau 11.

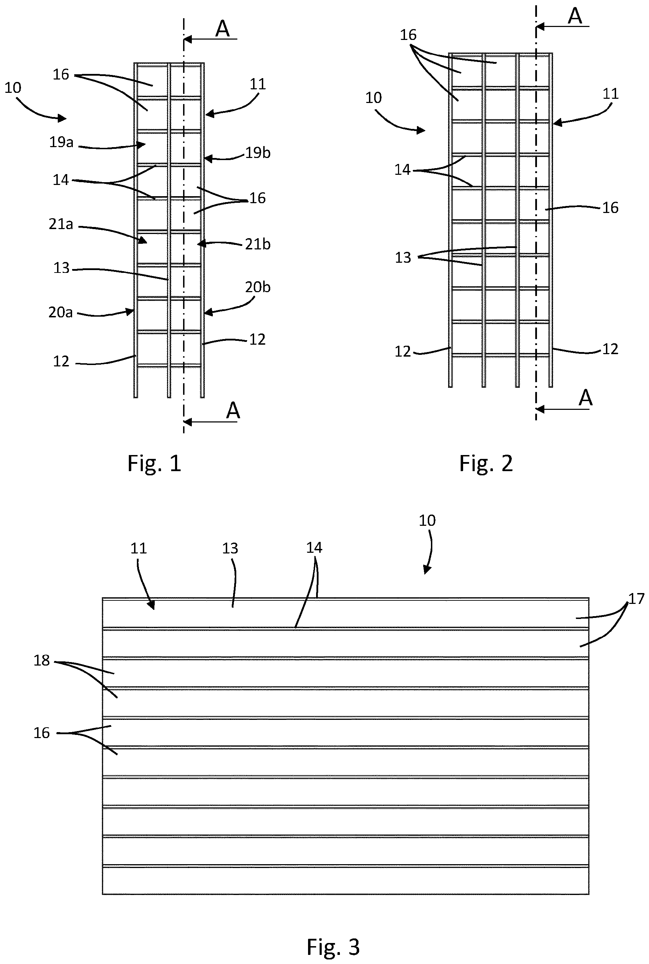

Dans le mode de réalisation illustré par la figure 1, les tubes 16 délimités par une paroi intermédiaire 13 et l'une des parois extérieures 12 forme un premier volume plan 19a définissant une première couche 20a de tubes, sensiblement plane et formant un premier circuit 21a. Les tubes 16 délimités par la paroi intermédiaire 13 et l'autre paroi extérieure 12 forme un deuxième volume plan 19b définissant une deuxième couche 20b de tubes, également sensiblement plane et formant un deuxième circuit 21b. Les volumes plans 19a, 19b formés par les deux couches 20a, 20b de tubes sont sensiblement parallèles entre eux.

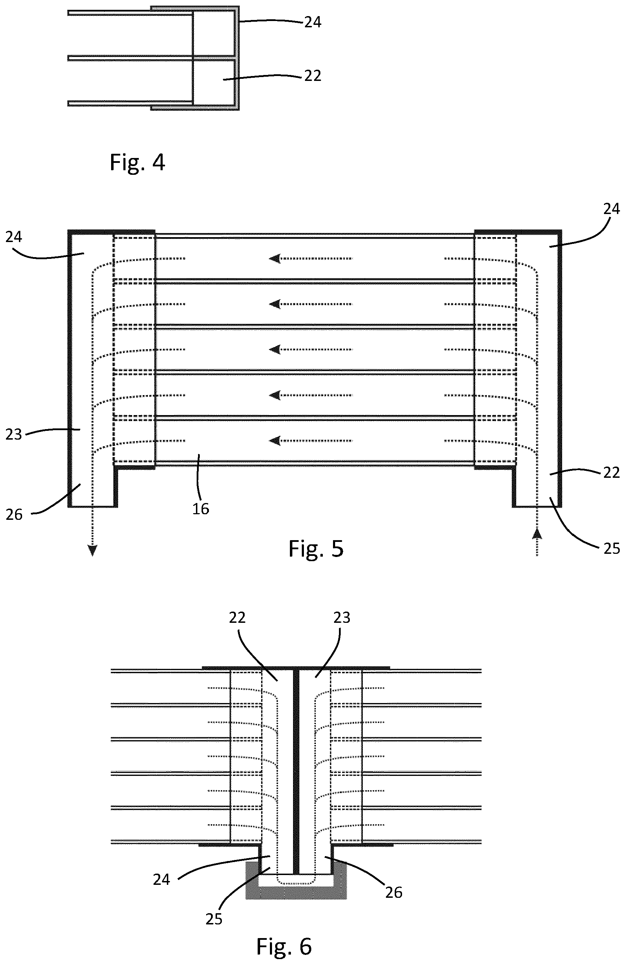

Les entrées 17 des tubes 16 de l'une des couches 20 sont reliées entre elles par un canal d'entrée 22 illustré par les figures 4 à 7 et 9, et agencées pour amener un fluide caloporteur dans les tubes. De manière similaire, les sorties 18 des tubes 16 de cette couche 20 sont reliées entre elles par un canal de sortie 23 illustré par les figures 5 à 7 et agencées pour extraire le fluide caloporteur de ces tubes 16. Il en va de même pour les entrées des tubes 16 de l'autre couche 20 ou de l'une des autres couches, qui sont reliés entre elles et pour les sorties des tubes 16 de cette autre couche 20, qui sont également reliées entre elles. Par contre, les entrées 17 de tubes de différentes couches ne sont pas reliées entre elles ou au moins pas de façon permanente. En d'autres termes, il est possible d'alimenter en fluide caloporteur les entrées 17 de chacune des couches 20 de façon indépendante.

Bien qu'en pratique, les sorties 18 des différentes couches 20 de tubes soient généralement indépendants, il est envisageable qu'elles soient reliées entre elles. Le canal d'entrée 22 de chaque circuit comporte un profilé 24 fixé à un champ du panneau 11 de façon étanche, ce qui signifie que le fluide caloporteur ne peut circuler que par une entrée 25 du canal d'entrée 22 et par les tubes 16 de la couche correspondante. Il ne peut pas s'échapper du canal d'entrée ailleurs que par ces tubes. Le canal de sortie 23 est également fixé au panneau 11 de façon étanche et comporte une sortie 26 de ce canal de sortie.

Selon un mode de réalisation préféré, le fluide caloporteur est du dioxyde de carbone circulant sous pression, à une pression généralement supérieure à 15 bars, pouvant aller jusqu'à 100 voire 150 bars. La température à laquelle circule le fluide caloporteur dépend bien entendu de l'application précise pour laquelle l'échangeur de chaleur est utilisé. Dans certains modes de réalisation dans lesquels le fluide caloporteur est du dioxyde de carbone (CO₂), la température peut être choisie comme étant supérieure à 31.1 °C et la pression supérieure à 73.8 bars. Dans ces conditions, le CO₂ est dans un état supercritique et présente ainsi des avantages liés à cet état particulier de la matière.

Le panneau peut comporter, sur l'une de ses faces ou les deux, une grille ou une armature fixée à ce panneau de façon à en être solidaire. Cette fixation peut se faire notamment au moyen d'une colle. La grille peut être utilisée pour augmenter la rigidité ou la résistance mécanique du panneau de façon à permettre à ce dernier de supporter une pression élevée. Cette grille peut également protéger le panneau d'agressions extérieures, notamment de cailloux. La grille peut en outre servir de surface d'accrochage dans le cas où le panneau est recouvert d'un revêtement décoratif tel que notamment un crépi.

La grille ou l'armature permet également d'allonger la durée de vie des panneaux en évitant ou en limitant les déformations à long terme, dues à la pression importante et continue dans ces panneaux. Par ailleurs, la grille peut être placée à cheval sur deux panneaux adjacents. La colle utilisée pour fixer l'armature ou la grille au panneaux permet d'améliorer ou d'assurer l'étanchéité de la jonction entre les panneaux.

Selon un premier mode d'utilisation, l'échangeur de chaleur 10 selon l'invention peut être utilisé comme un panneau radiant. Dans ce cas, le fluide caloporteur est introduit par l'entrée 25 du canal d'entrée 22 à une température dite température de consigne. Ce fluide caloporteur circule vers les entrées 17 des tubes 16, puis il est recueilli à la sortie 18 des tubes 16, collecté par le canal de sortie 23 et recueilli par la sortie 26 de ce canal de sortie 23 après avoir traversé les tubes 16 reliant ces canaux d'entrée aux canaux de sortie. En fonction de la température du fluide caloporteur et de l'environnement dans lequel il est placé, l'échangeur de chaleur peut être utilisé comme élément chauffant ou comme élément réfrigérant. Les paramètres du fluide caloporteur dans les deux circuits 21a, 21b peuvent être les mêmes ou être adaptés à l'utilisation spécifique et aux conditions de l'environnement dans lequel cet échangeur de chaleur 10 est utilisé.

L'échangeur de chaleur de l'invention peut être connecté à une pompe à chaleur (non représentée) qui peut produire du froid ou du chaud de façon très simple. De cette façon, le même échangeur de chaleur peut avoir des usages différents.

Selon un mode d'utilisation avantageux, l'échangeur de chaleur 10 est relié à une source d'énergie ou un réservoir d'énergie enterré. La température de cette source d'énergie peut typiquement être de l'ordre de 12 °C à 15 °C. Une pompe à chaleur est connectée à la source d'énergie et à l'échangeur de chaleur 10. Lorsque l'échangeur de chaleur doit fournir une température supérieure à la température de la source, soit supérieure à 12 °C à 15 °C dans notre exemple, de l'énergie est puisée dans la source par la pompe à chaleur, qui chauffe le fluide caloporteur à une température supérieure ou égale à la température de consigne. Ce fluide caloporteur est mis en circulation dans l'échangeur de chaleur à la température de consigne. Si au contraire, la température de consigne est inférieure à la température de la source, la pompe à chaleur refroidit le fluide caloporteur de l'échangeur de chaleur en prélevant de l'énergie dans ce fluide. L'énergie ainsi prélevée est envoyée à la source d'énergie et peut être utilisée pour "recharger" cette source.

Un ou plusieurs échangeurs de chaleur 10 tels que décrits ci-dessus peuvent être assemblés pour former un dispositif d'échange thermique. Un tel dispositif comporte, en plus des échangeurs de chaleur, au moins un régulateur de température du fluide caloporteur.

Comme cela est bien connu, il est possible de modifier la température d'un gaz de façon directe ou indirecte. Une modification directe de la température consiste à utiliser un dispositif de chauffage ou de refroidissement. Une modification indirecte de la température consiste à comprimer ou un détendre le gaz à volume constant. Ainsi, le compression du gaz dans un volume constant aura pour effet d'augmenter sa température alors qu'une détente de ce gaz à volume constant aura pour effet de diminuer la température. Ainsi, le régulateur de température peut comporter un dispositif de chauffage, un dispositif de refroidissement, un détendeur ou un compresseur.

Les deux couches 20 de tubes étant alimentées en fluide caloporteur de façon indépendante, les paramètres de ces fluides peuvent être réglés également de façon indépendante. Il est possible d'amener du gaz caloporteur tel que par exemple du CO₂ à une certaine pression et à une certaine température à l'entrée des canaux d'entrée de l'échangeur de chaleur, puis de détendre ce gaz de façon différentiée à chaque entrée pour régler la température du gaz circulant dans chacun des circuits.

Selon un mode de réalisation particulier, l'échangeur de chaleur 10 peut être intégré à un élément de construction d'un bâtiment, par exemple en étant placé contre une face extérieure du bâtiment. La température de part et d'autre de l'élément de construction contre lequel est placé cet échangeur de chaleur est mesurée au moyen de sondes de température appropriées. La température du fluide caloporteur circulant dans l'échangeur de chaleur peut être régulée de façon à être inférieure ou égale à la température la plus basse de l'environnement des deux côtés de l'échangeur de chaleur ou à être égale à une valeur de seuil. De cette façon, l'échangeur de chaleur joue le rôle de puit d'énergie et le fluide caloporteur capte une partie de l'énergie transférée à travers l'élément de construction du bâtiment, aussi bien de l'extérieur du bâtiment vers l'intérieur que dans la direction opposée.

Selon une réalisation spécifique, le premier et le deuxième circuit 21a, 21b peuvent être reliés et les paramètres caractérisant le fluide caloporteur sont les mêmes. Ceci peut être intéressant par rapport au mode de réalisation d'un panneau comportant une seule couche 20 de tubes ou un seul circuit 21 en ce sens que le panneau 11 présente une rigidité mécanique plus grande que dans le cas d'un panneau avec une seule couche et la quantité de fluide, soit la quantité d'énergie que ce fluide est capable d'échanger, est plus grande.

Dans le cas d'usage le plus fréquent, les deux couches 20 sont alimentées de façon séparée. Cette séparation permet de gérer de façon différentiée, les paramètres liés au fluide caloporteur. Ces paramètres sont en particulier la pression, la température, la vitesse et le sens de déplacement du fluide dans les tubes.

Le mode de réalisation dans lequel les deux couches 20 de tubes sont indépendantes permet notamment une application dans laquelle de l'énergie est récupérée de façon optimale au niveau de l'échangeur de chaleur 10. Ceci est en particulier intéressant dans le cas où l'échangeur de chaleur est placé contre ou dans une paroi de l'enveloppe d'un bâtiment.

Dans un mode d'utilisation particulier, l'échangeur de chaleur est associé à une sonde de température (non représentée) mesurant la température à l'intérieur du bâtiment, d'un côté de cet échangeur de chaleur et à une sonde de température mesurant la température à l'extérieur du bâtiment, de l'autre côté de l'échangeur de chaleur 10. Dans ce cas, les paramètres du fluide caloporteur et en particulier la température peuvent être définis en fonction des températures mesurées par les sondes.

Selon un mode de réalisation concret, la température du fluide caloporteur circulant dans la couche extérieure peut être réglée de façon à avoir une température légèrement plus basse que la température de l'environnement à l'intérieur du bâtiment. Ainsi, l'énergie qui s'échappe habituellement à travers les murs d'une habitation est récupérée par le fluide caloporteur de la première couche 20a et peut être stockée ou utilisée. Cette première couche de tubes joue ainsi le rôle d'isolation en ce sens que toute l'énergie qui est normalement perdue dans un bâtiment conventionnel lorsque la température à l'intérieur du bâtiment est plus élevée que la température à l'extérieur de ce bâtiment est récupérée par l'échangeur de chaleur. L'échangeur de chaleur forme ainsi un puit d'énergie.

La deuxième couche 20b de tubes peut être utilisée de manière similaire, la température du fluide caloporteur dans cette deuxième couche de tubes étant réglée en fonction de la température mesurée par la sonde de température extérieure. Cette température de fluide peut elle-aussi être réglée de façon à être légèrement inférieure à la température de l'environnement extérieur, de façon à jouer le rôle de puit d'énergie par rapport à l'extérieur. Ainsi, de l'énergie provenant de l'environnement extérieur peut également être récupérée, utilisée ou stockée par l'échangeur de chaleur.

Les deux couches 20 de tubes étant alimentées en fluide caloporteur de façon indépendante, les paramètres de ces fluides peuvent être réglés également de façon indépendante. Comme mentionné plus haut, la température du gaz peut être régulée en réglant sa pression dans un volume constant. Ainsi, il est possible d'amener du gaz caloporteur à une certaine pression et à une certaine température à l'entrée des canaux d'entrée de l'échangeur de chaleur, puis de détendre ce gaz de façon différentiée à chaque entrée pour régler la température du gaz circulant dans chacun des circuits.

Selon encore un autre mode de réalisation illustré par les figures 2, 8 et 9, l'échangeur de chaleur comporte trois couches de tubes, c'est-à-dire deux parois extérieures 12, deux parois intermédiaires 13 et des cloisons 14 reliant une parois extérieure à une parois intermédiaire adjacente ou les deux parois intermédiaires entre elles. Ces cloisons 14 sont disposées, comme dans les exemples précédents, de façon à former des tubes 16 parallèles entre eux, ayant une entrée 17 débouchant dans un champ du panneau 11 et une sortie 18 débouchant dans un champ opposé du panneau. Ces parois extérieures et intermédiaires forment trois volumes plans 19, au moins l'un de ces volumes plans et de préférence au moins deux d'entre eux, contenant un circuit 21 destiné au transport de fluide caloporteur.

Cet échangeur de chaleur peut être utilisé dans différentes configurations. Dans une première configuration, les entrées 17 des tubes 16 des trois couches sont reliées entre elles, de même que les sorties 18 des tubes 16 des trois couches. De tels panneaux présentent une rigidité mécanique importante et un volume de fluide caloporteur important par rapport à la surface utilisée. Ceci ne permet toutefois pas un traitement différencié des paramètres du fluide dans les différentes couches de tubes.

Selon une autre configuration, chacune des couches 20 de tubes 16 dispose d'une entrée 17 et d'une sortie 18 indépendante. Dans ce cas, les couches externes et internes peuvent être utilisées comme dans le mode de réalisation comportant deux couches de tubes. En particulier, les températures du fluide caloporteur peuvent être réglées en fonction de la température de leur environnement proche. La couche de tubes intermédiaire peut avoir différentes fonctions. Selon une première fonction, cette couche de tubes peut être associée à l'une des couches de tubes externe, en ce sens que les paramètres du fluide caloporteur circulant dans la couche de tubes intermédiaire sont les mêmes que ceux utilisés pour le fluide caloporteur de l'une des couches interne ou externe. Cette variante revient à doubler le volume de fluide caloporteur de l'une des couches, de façon souple, c'est-à-dire en pouvant choisir si le volume est doublé au niveau de la couche interne ou externe.

Selon une autre variante, la couche intermédiaire peut être utilisée comme couche isolante entre les deux couches externes. Cette isolation peut être obtenue par exemple en bouchant les tubes de la couche intermédiaire et donc en empêchant la circulation de gaz ou d'air dans cette couche.

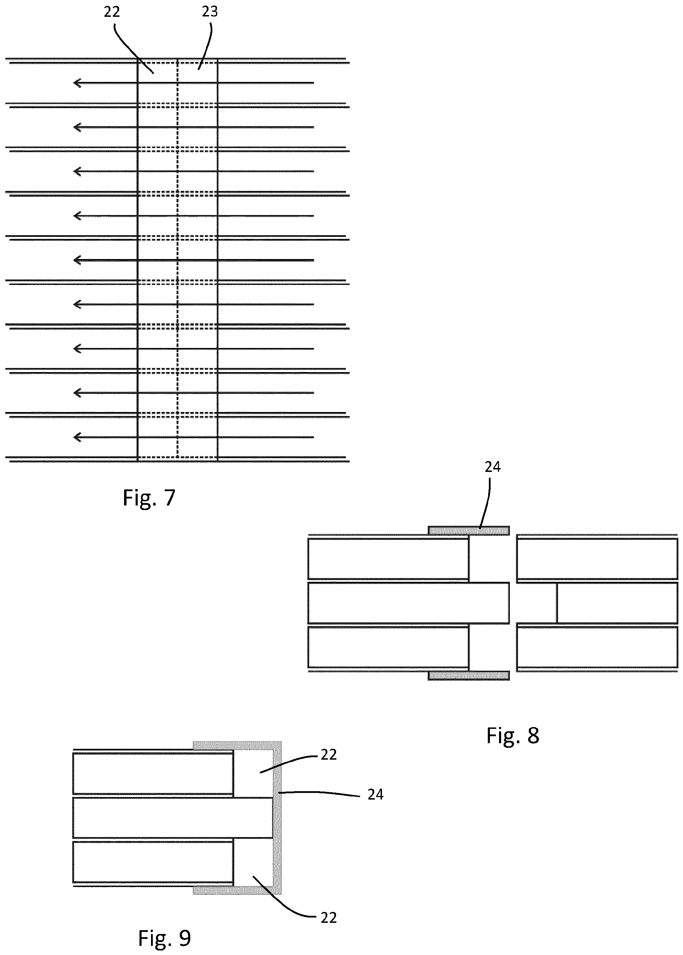

La figure 9 illustre un mode de réalisation particulier de l'invention dans lequel la couche intermédiaire sert de couche isolante. L'échangeur de chaleur 10 est réalisé à partir d'un panneau 11 comportant trois volumes plans ou trois couches 20 de tubes. Une zone des couches externes est supprimée au moyen d'un outil adéquat, par exemple une scie circulaire, de façon à laisser dépasser la couche intermédiaire. Un profilé 24 est ensuite placé le long du champ du panneau 11 dans lequel débouchent les tubes 16. Ce profilé est disposé de telle façon que tous les tubes 16 des trois couches débouchent dans le profilé et que les tubes de la couche intermédiaire soient en contact avec une face intérieure de ce profilé 24. Cette face intérieure du profilé peut être collée contre les entrées des tubes de la couche intermédiaire de façon à boucher ces tubes. De cette manière, on obtient un panneau 11 comportant deux couches de tubes pourvus d'une entrée 17 indépendante l'une de l'autre et une couche intermédiaire isolante. Il est clair que le même principe peut être appliqué sur le champ opposé du panneau de façon à avoir une sortie indépendante pour chaque couche de tubes.

Ce mode de réalisation est particulièrement intéressant. En effet, d'une part, avec trois couches de tubes, il présente une excellente rigidité mécanique et reste plan même si un gaz caloporteur circule à des pressions différentes entre les deux couches externes. D'autre part, il présente deux couches de tubes destinés à jouer le rôle d'échangeur de chaleur. Ceci permet un réglage différent des paramètres du fluide caloporteur circulant dans les deux couches actives. Ensuite, par le découpage particulier de la couche intermédiaire, il est simple de réaliser deux entrées et deux sorties de fluide caloporteur indépendantes, tout en utilisant un profilé 24 formant un seul canal d'entrée 22 et un seul canal de sortie 23, bouchant en même temps la couche de tubes intermédiaires. Par ailleurs, en réalisant une saignée dans la couche intermédiaire, il est également possible de connecter facilement deux panneaux entre eux, la languette formée par la couche intermédiaire lors du retrait des couches externes sur une partie du champ du panneau pouvant être placée dans la saignée réalisée du côté opposé du panneau. Ceci est illustré en particulier par la figure 8.

Dans cette variante, les couches internes et externes peuvent être utilisées de façon à tenir compte des températures internes et externes du bâtiment intégrant les panneaux. La couche intermédiaire empêche les échanges de chaleur trop importants entre ces deux couches interne et externe.

Les échangeurs de chaleurs, de même que les dispositifs d'échange thermique de l'invention sont particulièrement intéressants par le fait qu'ils sont faciles à installer et à monter sur un chantier de construction, sans requérir d'outils particuliers, ni de préparation particulière. A titre d'exemple, si plusieurs panneaux 11 sont à assembler selon les modes de réalisation illustré par les figures 8 et 9, les panneaux peuvent être tout d'abord placés provisoirement contre les éléments de construction. Les contours des panneaux peuvent être tracés pour tenir compte de la forme de ces éléments de constructions. Ainsi, il est par exemple possible de tracer le contour des fenêtres ou des portes, de même que des autres éléments ayant un impact sur la forme finale des panneaux. Ces panneaux peuvent ensuite être découpés selon le traçage réalisé, par exemple au moyen d'une scie à main, d'une scie sauteuse ou d'une scie circulaire notamment. Les découpages permettant le raccordement de deux panneaux adjacents peuvent être réalisés également sur place, au moyen d'une scie circulaire ou d'une défonceuse notamment.

Les panneaux ainsi découpés peuvent être mis en place définitivement contre les éléments de construction, puis les tubes qui ne sont pas utilisables pour le transfert de fluide caloporteur sont bouchés. Ces tubes non-utilisables sont les tubes pour lesquels au moins l'entrée ou la sortie ne peut pas être connectée de façon étanche au canal d'entrée ou de sortie ou à un tubes d'un panneau adjacent. Ceci peut en particulier être le cas pour des panneaux dont certains des tubes débouchent à proximité d'une fenêtre ou d'une porte du bâtiment.

Les entrées des tubes d'un panneau sont ensuite reliées soit à des sorties de tubes de panneaux adjacents, soit à un profilé de façon à former le canal d'entrée. De manière similaire, les sorties des tubes d'un panneau sont reliées soit à des entrées de tubes de panneaux adjacents, soit à un profilé de façon à former le canal de sortie. Des éléments d'étanchéité sont utilisés pour la liaison des différents éléments formant le dispositif d'échange thermique, de façon à permettre de faire circuler du fluide caloporteur gazeux sous pression d'une entrée à une sortie, sans perte de matière. Ces éléments d'étanchéité peuvent notamment utiliser une armature ainsi qu'une colle étanche.

Les entrées et les sorties peuvent être inversées sans changer le fonctionnement du système. Il est également possible que le fluide caloporteur circule dans deux directions opposées de deux volumes plants différents d'un même panneau. Ainsi les entrées d'un volume plan peuvent être à proximité des sorties de l'autre volume plan du panneau.

Les échangeurs de chaleur selon l'invention présentent plusieurs avantages. Ils permettent de maximiser la surface utile et le volume utile par rapport à la surface totale du panneau. Etant donné qu'ils se présentent sous la forme d'un panneau complet, leur manipulation est simple par rapport à des tubes qu'il peut être difficile de placer contre une paroi d'un bâtiment. De plus, ils présentent une efficacité importante et peuvent être utilisés aussi bien comme élément de chauffage que comme élément de climatisation.

Les modes de réalisation décrits ci-dessus fonctionnent avec un fluide caloporteur formé de dioxyde de carbone. D'autres fluides caloporteur, essentiellement à l'état gazeux, pourraient toutefois également être utilisés. Il est toutefois également possible d'utiliser une transition de phase entre les états gazeux et liquide pour transporter de l'énergie dans un dispositif selon l'invention.

## Revendications

1. Échangeur de chaleur (10) comportant au moins un panneau (11) permettant la circulation de fluide caloporteur, cet échangeur de chaleur étant **caractérisé en ce que** ledit panneau (11) comporte au moins deux circuits (21) indépendants de fluide caloporteur, chaque circuit (21) comportant au moins une entrée (17) de fluide caloporteur, le panneau (11) comportant en outre au moins une sortie (18) de fluide caloporteur.

2. Échangeur de chaleur selon la revendication 1, **caractérisé en ce que** chaque circuit (21) de fluide caloporteur comporte une pluralité de tubes (16) reliant une entrée (17) de fluide caloporteur à une sortie (18) de fluide caloporteur.

3. Échangeur de chaleur selon la revendication 1, **caractérisé en ce que** les tubes (16) formant un circuit (21) de fluide caloporteur sont disposés dans un volume plan (19) délimité par deux plans parallèles entre eux, les volumes plans (19) des différents circuits (21) étant parallèles entre eux.

4. Échangeur de chaleur selon la revendication 1, **caractérisé en ce que** le panneau (11) comporte deux parois extérieures (12) et au moins une paroi intermédiaire (13), **en ce que** les parois (12, 13) sont séparées les unes des autres par des cloisons (14), **en ce que** les parois et les cloisons forment lesdits tubes (14) formant les circuits (21) de fluide caloporteur.

5. Échangeur de chaleur selon la revendication 4, **caractérisé en ce que** ledit panneau (11) comporte deux parois intermédiaires (13), définissant trois plans, chaque plan contenant des cloisons (14) définissant des tubes (16).

6. Échangeur de chaleur selon la revendication 5, **caractérisé en ce que** les tubes (16) du plan intermédiaire sont fermés à au moins l'une de leur extrémité.

7. Échangeur de chaleur selon l'une quelconque des revendications précédentes, **caractérisé en ce que** le fluide caloporteur est du gaz.

8. Échangeur de chaleur selon la revendication 1, **caractérisé en ce que** les tubes (16) des circuits (21) de fluide caloporteur comportent une entrée (17) débouchant dans un champ du panneau (11) et une sortie (18) débouchant dans un autre champ dudit panneau (11) et **en ce que** le panneau comporte un profilé (24) disposé le long des champs du panneau dans lesquels débouchent ladite entrée (17) et ladite sortie (18).

9. Échangeur de chaleur selon la revendication 8, **caractérisé en ce que** l'un desdits profilés (24) comporte une entrée formant ladite entrée du fluide caloporteur et **en ce que** l'autre profilé comporte une sortie formant ladite sortie du fluide caloporteur.

10. Dispositif d'échange thermique comportant au moins un échangeur de chaleur (10) selon l'une quelconque des revendications précédentes, **caractérisé en ce que** ce dispositif d'échange thermique comporte un régulateur de température du fluide caloporteur.

11. Dispositif d'échange thermique selon la revendication 10, **caractérisé en ce que** le régulateur de température comporte un détendeur et/ou un compresseur.

12. Dispositif d'échange thermique selon la revendication 10, comportant au moins deux panneaux (11), **caractérisé en ce que** la sortie du canal d'entrée d'un panneau est connectée à l'entrée du canal de sortie d'un panneau adjacent.

13. Dispositif d'échange thermique selon la revendication 12, **caractérisé en ce que** les sorties des tubes (14) d'un panneau (11) sont connectées de façon étanche à l'entrée (17) des tubes du panneau (11) adjacent.

14. Dispositif d'échange thermique selon la revendication 12, **caractérisé en ce que** ledit au moins un panneau (11) est connecté à une pompe à chaleur.

15. Méthode de montage d'échangeurs de chaleur selon l'une quelconque des revendications précédentes, **caractérisé en ce qu'**il comporte les étapes consistant à :
• placer un panneau (11) contre un élément de construction ;
• découper le panneau (11) de façon à adapter sa forme à la forme de l'élément de construction contre lequel il est placé ;
• boucher au moins une extrémité des tubes (14) non-utilisables pour le transfert de fluide caloporteur entre l'entrée (17) et la sortie (18) de fluide caloporteur ;
• fixer au moins un profilé (24) sur l'un des champs du panneau (11) de façon à relier entre elles, les entrées (17) des tubes (14) du chacun des circuits (21) indépendamment des entrées (17) des circuits (21) adjacents;
• fixer au moins un profilé (24) sur l'un des champs du panneau (11) de façon à relier les sorties (18) des tubes (14) entre elles.
